Europäisches Patentamt

European Patent Office

Office européen des brevets

(19)

(11) **EP 1 041 489 A1**

(12) **EUROPÄISCHE PATENTANMELDUNG**

(43) Veröffentlichungstag:
04.10.2000 Patentblatt 2000/40

(51) Int Cl.7: **G06F 12/04**, G06F 12/14

(21) Anmeldenummer: 99106617.6

(22) Anmeldetag: 31.03.1999

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **SIEMENS AKTIENGESELLSCHAFT**
**80333 München (DE)**

(72) Erfinder:
• **Sedlak, Holger**
  **85658 Egmating (DE)**
• **Kniffler, Oliver**
  **81737 München (DE)**
• **Guo, Shuwei Dr.**
  **81737 München (DE)**

(54) **Verfahren und Schaltung zur Erkennung einer Segmentverletzung bei Speicherzugriffen**

(57)     Verfahren und Schaltung zur Erkennung einer Segmentverletzung bei Speicherzugriffen mit unterschiedlicher Zugriffslänge von maximal $M=2^N$ Byte, in welchen zu der logischen Adresse (LA) des Zugriffs ein Wert addiert wird, dessen N niederwertigste Bits dem Binärwert der aktuellen Zugriffslänge minus 1 und dessen übrige Bits den entsprechenden, invertierten Bits der Differenz zwischen Segmentlänge und M entsprechen, und bei einem Überlauf bzw. bei einem negativen Additionsergebnis eine Segmentverletzung erkannt wird.

Fig. 1

**Beschreibung**

Die vorliegende Erfindung betrifft ein Verfahren und eine Schaltung zur Erkennung einer Segmentverletzung bei Speicherzugriffen mit unterschiedlicher Zugriffslänge.

Gemäß dem Stand der Technik erfolgte die Erkennung einer Segmentverletzung durch Prüfung der Differenz zwischen der logischen Adresse (LA) des Zugriffspunktes innerhalb des Zugriffssegments und der Länge des Zugriffssegments (Length). Eine Segmentverletzung ist immer dann ausgeschlossen, wenn das Ergebnis dieser Differenzbildung kleiner als Null ist.

Bei modernen Prozessoren soll nun auch ein Speicherzugriff mit unterschiedlicher Zugriffsbreite möglich sein, das heißt, es soll sowohl ein Zugriff auf einzelne Bytes, auf Worte (= 2 Bytes) und Doppelworte (= 4 Bytes) möglich sein. Dadurch sind die Bedingungen für die Erkennung einer Segmentverletzung jeweils unterschiedlich. Dies macht die Ausführung entsprechender Prüfschaltungen oder Prüfverfahren zur Erkennung solcher Segmentverletzungen mit den Mitteln des Standes der Technik sehr schwierig und kompliziert.

Ausgehend von diesem Stand der Technik ist es daher Aufgabe der vorliegenden Erfindung, ein sehr einfaches Verfahren und eine sehr einfache Schaltung zur Erkennung einer Segmentverletzung bei Speicherzugriffen mit unterschiedlicher Zugriffslänge zu schaffen.

Erfindungsgemäß wird diese Aufgabe bei einer Zugriffslänge von maximal $M = 2^N$ dadurch gelöst, daß zu der logischen Adresse des Zugriffs ein Wert addiert wird, dessen N niederwertigste Bits dem Binärwert der aktuellen Zugriffslänge - 1 und dessen übrige Bits den entsprechenden, invertierten Bits der Differenz zwischen Segmentlänge und M entsprechen, und bei einem Überlauf bzw. bei einem negativen Additionsergebnis eine Segmentverletzung erkannt wird.

Ebenso wird diese Aufgabe durch eine Schaltung gelöst, die einen Addierer mit zwei Eingängen umfaßt, dessen einer Eingang mit einem Signal verbunden ist, welches der logischen Adresse des Zugriffs entspricht, während der andere Eingang für eine maximale Zugriffslänge von $M = 2^N$ Byte mit seinen N niederwertigsten Bits mit einem Signal verbunden ist, dessen Wert dem Binärwert der aktuellen Zugriffslänge - 1 entspricht und mit seinen übrigen Bits mit einem Inverter verbunden ist, der mit einem Signal gespeist wird, welches der Differenz zwischen Segmentlänge und M entspricht.

Die vorliegende Erfindung wird im folgenden anhand des in den beigefügten Zeichnungen dargestellten Ausführungsbeispiels näher erläutert. Es zeigt:

Fig. 1 ein Prinzipschaltbild einer erfindungsgemäßen Schaltung;

Fig. 2 die Tabelle für die Belegung der niederwertigsten Bits für Zugriffe mit 1, 2, 3 und 4 Byte Zugriffsbreite;

Fig. 3 ein einfaches Ausführungsbeispiel der Erfindung mit 4 Bit maximaler Adresslänge; und

Fig. 4 ein Beispiel für verschiedene Zugriffe mit der Schaltung der Fig. 3.

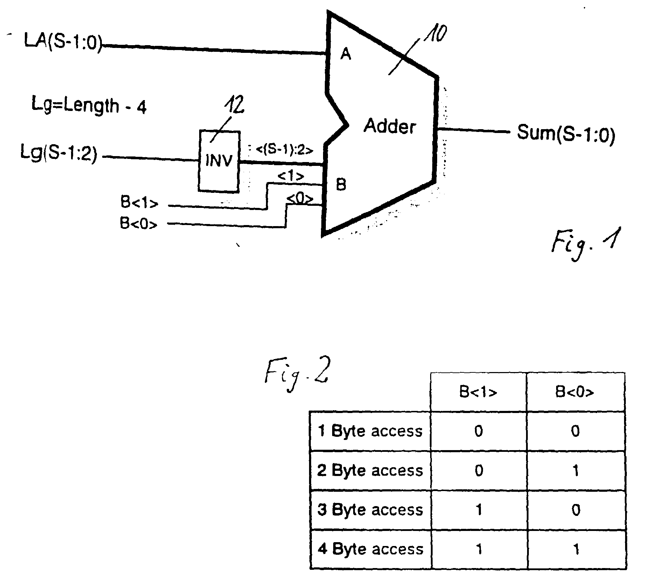

Figur 1 zeigt ein Prinzipschaltbild für ein Ausführungsbeispiel der vorliegenden Erfindung. Dabei wird von S-Bit langen logischen Adressen ausgegangen, die somit auf ein Speichersegment von $2^S$ Byte zugreifen können. Als maximale Zugriffslänge wird $M = 2^N = 4$ gesetzt. Damit ist N = 2. In dem vorliegenden Beispiel kann also ein byteweiser, ein wortweiser, ein dreibyte-weiser und ein Doppelwort-Zugriff auf den Speicher erfolgen.

Wie in Fig. 1 dargestellt besteht die erfindungsgemäße Schaltung zur Erkennung einer Segmentverletzung aus einem Addierer 10, der über zwei Eingänge A und B verfügt, die jeweils S-Bit Eingangsdaten addieren können. Der Ausgang Sum ist ebenfalls S-Bit lang.

Zur Erkennung einer Segmentverletzung wird nun die logische Adresse LA des Speicherzugriffs auf den einen Eingang A des Addierers 10 gelegt. Der andere Eingang B des Addierers 10 wird dergestalt belegt, daß die N, im vorliegenden Fall also 2, niederwertigsten Bits B <0> und B <1> je nach Abhängigkeit von der Zugriffslänge (Zugriff auf 1, 2, 3 oder 4 Byte) gemäß der Fig. 2 bestimmt werden. Die zwei niederwertigsten Bits tragen also den Wert Zugriffslänge - 1. Die übrigen Bits des Eingangs B, also die Bits <S-1> bis <2> werden von einem Inverter 12 angesteuert, der wiederum mit dem Wert Segmentlänge minus maximal zulässige Zugriffslänge 11 gespeist wird.

Eine Segmentverletzung wird dann erkannt, wenn der Addierer 10 nach der Beaufschlagung mit diesen Signalen einen Überlauf oder eine negative Zahl am Ausgang anzeigt. Ob der entsprechende Ausgangswert des Addierers als Überlauf oder als negative Zahl definiert wird, hängt ausschließlich von der Definition der Binärzahlen in dem jeweiligen Rechnersystem ab.

Auf diese Weise kann sehr einfach und mit sehr geringem Hardwareaufwand eine Prüfung auf Segmentverletzungen erfolgen, auch wenn Speicherzugriffe mit unterschiedlicher Wortlänge zulässig sein sollen. Die Hardwareimplementierung der vorliegenden Erfindung ist darüber hinaus außerordentlich einfach.

Vorzugsweise findet die erfindungsgemäße Schaltung und das erfindungsgemäße Verfahren in der Speicherverwaltungsvorrichtung (Memory Management Unit - MMU) eines Prozessors (CPU) Verwendung. Dabei kann dann bei jedem Programmcode-, Daten- oder Stack-Segmentzugriff eine Verletzung der Segmentgrenzen erkannt werden.

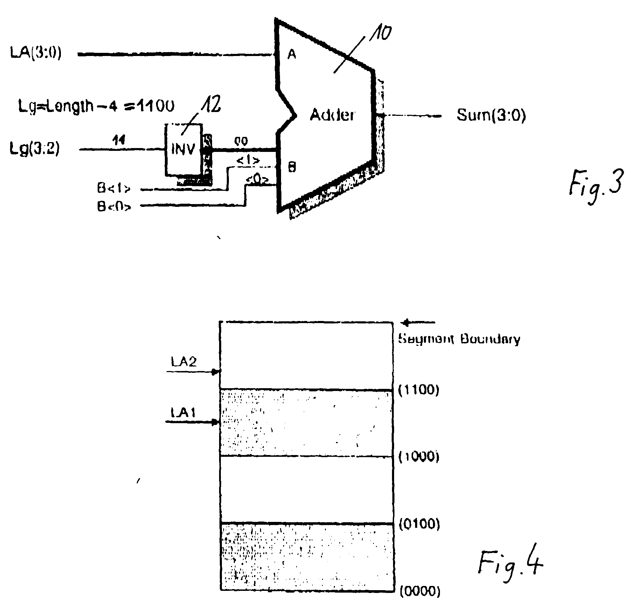

Die Funktion des erfindungsgemäßen Verfahrens und der erfindungsgemäßen Schaltung ist anhand des in den Fig. 3 und 4 dargestellten Beispiels noch besser verständlich:

Das Beispiel geht von der in Fig. 3 dargestellten Schaltung aus, die im wesentlichen der Fig. 1 entspricht. Die Belegung der Bits B <1> und B <0> entspricht wieder der Tabelle der Fig. 2. Im übrigen wird bei dem vorliegenden Beispiel eine Adresslänge von S = 4 Bit logische Adressen (von 0000 bis 1111) und eine Segmentlänge von $2^S$ = 16 Adressen angenommen. Als maximal zulässige Zugriffsbreite auf das Segment wird M = $2^N$ = 4, damit also N = 2 angenommen. Für einen Zugriff auf 1, 2, 3 oder 4 Byte werden die beiden niederwertigsten Bits am Eingang B des Addierers 10 gemäß Fig. 2 auf 00/01/10/11 gesetzt. Das Überlauf- oder Negativ-Ausgangssignal des Addierers gibt dann die Information, ob eine Segmentverletzung vorliegt, oder nicht.

Die aktuelle logische Adresse wird mit 4 Bit Länge in den Eingang A des Addierers 10 gegeben. Der Wert Segmentlänge minus maximale Zugriffsbreite ergibt sich hier als 10000 - 100 = 1100. Die höherwertigen Bits dieses Werts, im vorliegenden Fall also die beiden höchstwertigen Bits werden dem Inverter 12 zugeführt. Da diese im vorliegenden Fall mit "11" belegt sind, ergibt sich als Ausgangssignal des Inverters "00". Diese beiden Bits bilden also die höchstwertigen Bits am Eingang B des Addierers 10.

Im folgenden werden Beispiele für zulässige und nicht zulässige Speicherzugriffe anhand der Fig. 4 dargestellt. Die Fig. 4 zeigt das Speichersegment mit den Adressen 0000 bis 1111. 1111 bildet die Segmentgrenze (Segment boundary).

1. Als erstes wird ein Zugriff auf die logische Adresse LA1 = 1010 betrachtet. In diesem Fall ist der Ausgangswert des Addierers 10 unabhängig von der Länge des Speicherzugriffs jeweils größer 0 bzw. es tritt kein Überlauf auf:

Sum (3:0) = 1010 + 00XX = 1XXX > 0.

In diesem Fall kann also keinesfalls eine Segmentverletzung auftreten, unabhängig davon, mit welcher Wortbreite der Zugriff erfolgt.

2. Zugriff auf der logischen Adresse LA2 = 1101. In diesem Fall ist der Ausgangswert des Addierers 10 abhängig von der Wortlänge des gewünschten Zugriffs:

Zugriff mit 1 Byte Breite: Sum = 1101 + 0000 = 1101 > 0 (keine Segmentverletzung)

Zugriff mit 2 Byte Breite: Sum = 1101 + 0001 = 1110 > 0 (keine Segmentverletzung)

Zugriff mit 3 Byte Breite: Sum = 1101 + 0010 = 1111 > 0 (keine Segmentverletzung)

Zugriff mit 4 Byte Breite: Sum = 1101 + 0011 = 1 0000 < 0 bzw. Überlauf: es wird eine Segmentverletzung erkannt!

3. Als weiteres Beispiel soll noch der Zugriff auf die logische Adresse LA1 für den Fall behandelt werden, daß das Segment nur 12 Byte lang ist.

Dann gilt: LG = Length - 4 = 1100 - 0100 = 1000, damit liegen am Eingang des Inverters 12 die Bits 10 an, am Ausgang des Inverters die Bits 01. Es ergibt sich dann folgende Tabelle: Segmentlänge: 12 Byte (Segmentgrenze = 1100) LA1 = 1010

1 Byte Zugriff: Sum = 1010 + 0100 = 1110 > 0 (keine Segmentverletzung)

2 Byte Zugriff: Sum = 1010 + 0101 = 1111 > 0 (keine Segmentverletzung)

3 Byte Zugriff: Sum = 1010 + 0110 = 1 0000 < 0 bzw. Überlauf: Segmentverletzung!

4 Byte Zugriff: Sum = 1010 + 0111 = 1 0001 < 0 bzw. Überlauf: Segmentverletzung!

Erfindungsgemäß können also mit einer sehr einfachen Hardwareimplementierung für beliebige Segmentgrenzen und frei wählbare Wortbreiten beim Zugriff Segmentverletzungen sicher erkannt werden.

**Patentansprüche**

**1.** Verfahren zur Erkennung einer Segmentverletzung bei Speicherzugriffen mit unterschiedlicher Zugriffslänge von maximal M=$2^N$ Byte, **dadurch gekennzeichnet,** daß zu der logischen Adresse (LA) des Zugriffs ein Wert addiert wird, dessen N niederwertigste Bits dem Binärwert der aktuellen Zugriffslänge minus 1 und dessen übrige Bits den entsprechenden, invertierten Bits der Differenz zwischen Segmentlänge und M entsprechen, und bei einem Überlauf bzw. bei einem negativen Additionsergebnis eine Segmentverletzung erkannt wird.

**2.** Schaltung zur Erkennung einer Segmentverletzung bei Speicherzugriffen mit unterschiedlicher Zugriffslänge von maximal M=$2^N$ Byte, **dadurch gekennzeichnet,** daß sie einen Addierer (10) mit zwei Eingängen (A, B) umfaßt, dessen einer Eingang (A) mit einem Signal verbunden ist, welches der logischen Adresse (LA) des Zugriffs entspricht, während der andere Eingang (B) mit seinen N niederwertigsten Bits mit einem Signal verbunden ist, dessen Wert dem Binärwert der aktuellen Zugriffslänge minus 1 entspricht, und mit seinen übrigen Bits mit einem Invertierer (12) verbunden ist, der mit einem Signal gespeist wird, welches der Differenz zwischen Segmentlänge und M entspricht.

3. Schaltung nach Anspruch 2, ,
   **dadurch gekennzeichnet,** daß sie in die Speicherverwaltungsvorrichtung (MMU) einer Zentralrecheneinheit (CPU) integriert ist.

Fig. 1

Fig. 2

|  | B<1> | B<0> |
|---|---|---|
| 1 Byte access | 0 | 0 |
| 2 Byte access | 0 | 1 |
| 3 Byte access | 1 | 0 |
| 4 Byte access | 1 | 1 |

LA(3:0)

Lg=Length−4 =1100    _12_

Lg(3:2)    _14_    INV    00

B<1>    <1>
B<0>    <0>

A    _10_

Adder    Sum(3:0)

B

*Fig.3*

Segment Boundary

LA2

LA1

(1100)

(1000)

(0100)

(0000)

*Fig.4*

**Europäisches Patentamt**

## EUROPÄISCHER RECHERCHENBERICHT

Nummer der Anmeldung

EP 99 10 6617

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 784 713 A (MCMAHAN STEVEN C) 21. Juli 1998 (1998-07-21) * Zusammenfassung; Abbildung 2 * * Spalte 1, Zeile 64 - Spalte 3, Zeile 26 * * Spalte 4, Zeile 19 - Spalte 6, Zeile 7 * | 1-3 | G06F12/04 G06F12/14 |
| A | US 5 577 219 A (TIMKO MARK ET AL) 19. November 1996 (1996-11-19) * Zusammenfassung; Abbildungen 4,5 * * Spalte 1, Zeile 49 - Zeile 67 * | 1-3 | |

| | RECHERCHIERTE SACHGEBIETE (Int.Cl.7) |
|---|---|
| | G06F |

Der vorliegende Recherchenbericht wurde für alle Patentansprüche erstellt

| Recherchenort | Abschlußdatum der Recherche | Prüfer |
|---|---|---|
| DEN HAAG | 13. Oktober 1999 | Powell, D |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**
EP 99 10 6617

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-1999

| Im Recherchenbericht angeführtes Patentdokument | Datum der Veröffentlichung | Mitglied(er) der Patentfamilie | Datum der Veröffentlichung |
|---|---|---|---|
| US 5784713    A | 21-07-1998 | KEINE | |
| US 5577219    A | 19-11-1996 | KEINE | |

Für nähere Einzelheiten zu diesem Anhang : siehe Amtsblatt des Europäischen Patentamts, Nr.12/82

EPO FORM P0461